# EUROPÄISCHE PATENTSCHRIFT

(11) **EP 2 560 159 B1**
(45) Veröffentlichungstag und Bekanntmachung des Hinweises auf die Patenterteilung: **12.03.2014**
(21) Anmeldenummer: 11006713.9
(22) Anmeldetag: 17.08.2011
(51) Int. Cl.: G10L 19/018, G11B 20/10, G11B 20/00

(54) **Kodiersystem zur Kinoidentifikation und zugehöriges Verfahren**
Encoding system for cinema identification and corresponding method
Système de codage pour l'identification de cinema et procédé associé

(43) Veröffentlichungstag der Anmeldung: 20.02.2013
(73) Patentinhaber: TS Provide GmbH, 64331 Weilerstadt (DE); Kraus Hardware GmbH, 63762 Großostheim-Ringheim (DE)
(72) Erfinder: Schupp, Thomas, 64331 Weiterstadt (DE); Kraus, Andreas, 63762 Grossostheim (DE)
(74) Vertreter: Walkenhorst, Andreas

(56) Entgegenhaltungen:
- RASHMI G DUKHI: "Watermarking: A copyright protection tool", ELECTRONICS COMPUTER TECHNOLOGY (ICECT), 2011 3RD INTERNATIONAL CONFERENCE ON, IEEE, 8. April 2011 (2011-04-08), Seiten 36-41, XP031956868, DOI: 10.1109/ICECTECH.2011.5941952 ISBN: 978-1-4244-8678-6
- NAKASHIMA Y ET AL: "Watermarked Movie Soundtrack Finds the Position of the Camcorder in a Theater", IEEE TRANSACTIONS ON MULTIMEDIA, IEEE SERVICE CENTER, PISCATAWAY, NJ, US, Bd. 11, Nr. 3, 1. April 2009 (2009-04-01), Seiten 443-454, XP011346583, ISSN: 1520-9210, DOI: 10.1109/TMM.2009.2012938
- JEFFREY A BLOOM ED - ANONYMOUS: "Digital Cinema Content Security and the DCI", INFORMATION SCIENCES AND SYSTEMS, 2006 40TH ANNUAL CONFERENCE ON, IEEE, PI, 1. März 2006 (2006-03-01), Seiten 1176-1181, XP031012004, ISBN: 978-1-4244-0349-3

## Beschreibung

Die Erfindung betrifft ein Kodiersystem zur Einbringung eines zur Identifikation eines Kinos geeigneten Signals in ein von einem Soundsystem des Kinos akustisch ausgestrahltes Soundsignal.

Urheberrechtlich geschützte Werke, wie beispielsweise Kinofilme, Musikstücke oder literarische Werke, sind stets der Gefahr ausgesetzt, auf illegale Weise kopiert und verbreitet zu werden. Bei digitalen Medien geschieht eine Verbreitung über das Internet oftmals sehr effektiv und schnell. Ist erst einmal eine illegale Kopie auf diese Weise in den Umlauf gebracht, wird sie - bei entsprechendem Interesse - bereits innerhalb weniger Minuten oder Stunden vervielfacht und auf unterschiedlichen Servern bzw. Kanälen angeboten. Diverse Filme oder auch Musikproduktionen sind in der Vergangenheit bereits kurz nach oder sogar vor ihrem offiziellen Veröffentlichungstermin im Internet zur Verfügung gestellt worden. Durch derartige illegal und im Wesentlichen kostenlos verbreitete Kopien entstehen den entsprechenden Industrien Schäden durch verlorene Einnahmen in Milliardenhöhe. Zwar sind derartige illegale Angebote unter Strafe gestellt, diese Maßnahmen haben aber, wie die Vergangenheit gezeigt hat, nur bedingt abschreckende Wirkung.

Es besteht daher seit jeher ein Interesse, die Verbreitung illegaler Kopien zu unterbinden, einzuschränken bzw. nach erfolgter Tat den oder diejenigen Verantwortlichen zu identifizieren und zu bestrafen bzw. den entstandenen Schaden ersetzt zu bekommen.

Eine in verschiedenen Bereichen verwendete Methode, um die Herkunft von insbesondere illegal verbreiteten Kopien zuverlässig zu identifizieren, besteht darin, die eigentliche zu dem Werk gehörige Information mit einer Zusatzinformation derart zu überlagern, dass diese Zusatzinformation von dem Konsumenten gar nicht oder nur mit aufwändigen Mitteln aufgefunden wird, bei ihrer Extraktion aber einen eindeutigen Hinweis auf den Ursprung der Kopie liefert. Eine derartige Zusatzinformation wird je nachdem, ob sie auf visuelle oder akustische Weise eingebracht wird, als optisches bzw. akustisches Wasserzeichen bezeichnet.

Ein derartiges Wasserzeichen kann für jede Kopie individuell ausgestaltet sein, so dass damit die Identität einer damit versehenen Kopie zuverlässig identifiziert werden kann. Bekannte Verfahren, bei denen bei illegaler Verbreitung einer Kopie das jeweilige Kino identifiziert werden soll, in dem diese Kopie erzeugt wurde, arbeiten beispielsweise nach dem Prinzip einer individuellen Verteilung und Vorverarbeitung von Filmmaterial. Das heißt, vor der Verteilung werden in das Bildmaterial und/oder das Tonmaterial unterschiedliche Markierungen gesetzt, wobei für jedes Kino bzw. jede Distribution diese Markierungen unterschiedlich gewählt werden oder an unterschiedlichen Stellen im Bild- bzw. Tonmaterial gesetzt werden. In Abhängigkeit von diesen Markierungen kann dann bei der Austrahlung des Films während einer Vorführung in Abhängigkeit von der entsprechenden Kopie das Tonsignal verändert und ein akustisches Wasserzeichen gesendet werden. Eine derartige Methode ist beispielsweise in der WO 2008/010065 offenbart.

Aufgrund der zunehmenden Verbreitung von digitalem Kino sind derartige Methoden nicht mehr besonders praktikabel und auch nicht zukunftsträchtig. Das digitale Filmmaterial wird nämlich an die einzelnen Kinos gewöhnlich in Form einer verschlüsselten Festplatte geliefert, wobei aufgrund der starken Nachfrage und Beliebtheit von Filmen diese Festplatten gewissermaßen in Massenproduktion erstellt werden. Dazu kommt, dass die Filmindustrie sich auf einen Standard einigen müsste, um eine eindeutige Identifikation eines Kinos zu ermöglichen.

Ein Verfahren zur Einbringung von digitalen Wasserzeichen in Bild und Ton ist bekannt aus Rashmi G Dukhi: "Watermarking: A copyright protection tool"; Electronics Computer Technology (ICECT), 2011, 3RD International Conference on, IEEE (2011-04-08).

Der Erfindung liegt die Aufgabe zugrunde, ein Kodiersystem bereitzustellen, das insbesondere bei der Verwendung digitaler Filmmedien eine zuverlässige und eindeutige Identifizierung eines Kinos, ungeachtet des verwendeten Standards, ermöglicht. Weiterhin soll ein entsprechendes Verfahren angegeben werden.

In Bezug auf das Kodiersystem wird die Aufgabe erfindungsgemäß gelöst durch ein Kodiersystem mit:
- einem Eingangsmodul, welches einen Eingangsmoduleingang für ein Eingangssignal von einem Prozessor, insbesondere einem Dolby-Prozessor, und einen Eingangsmodulsignalausgang aufweist,
- einem Ausgangsmodul, welches einen Ausgangsmodulsignaleingang und einen Ausgangsmodulsignalausgang zum Anschluss an ein Soundsystem aufweist,
- und einem Modulator, der zwischen Eingangssignalausgang und Ausgangsmodulsignaleingang geschaltet ist und während einer Anzahl von Zeitintervallen dem Ausgangsmodulsignaleingang ein Identifikationssignal, sonst das am Eingangsmodulsignalausgang anliegende Signal bereitstellt wobei eine Kontrolleinheit vorgesehen ist, die einen Indentifikationscode generiert und an den Modulator übermittelt, und wobei der Modulator aus dem Identifikationscode das Identifikationssignal erzeugt, wobei das Eingangsmodul einen Eingangskonverter umfasst, welcher ein am Eingangsmodulsignaleingang anliegendes symmetrisches Eingangssignal des Prozessors in ein einpolig geerdetes Signal konvertiert und am Eingangsmodulsignalausgang bereitstellt, und wobei das Ausgangsmodul einen Ausgangskonverter umfasst, welcher ein am Ausgangsmodulsignaleingang anliegendes einpolig geerdetes Signal des Modulators in ein symmetrisches Ausgangssignal konvertiert und am Ausgangsmodulsignalausgang bereitstellt, wobei ein Amplitudenmodul vorgesehen ist, welches das einpolig geerdete Signal zu einem die Amplitude dieses Signals charakterisierendes Amplitudensignal verarbeitet und an die Kontrolleinheit übermittelt.

Vorteilhafte Ausgestaltungen der Erfindung sind Gegenstand der Unteransprüche.

Die Erfindung geht von der Überlegung aus, dass eine Identifikation einer in einem Kino illegal gefertigten Kopie des Films in vorteilhafter Weise über den Soundtrack geschehen sollte. Dies ist beispielsweise deshalb wichtig, da bei der illegalen Verbreitung von Kinofilmen oft eine einmal vorhandene Bildsequenz mit einem entsprechenden Soundtrack versehen wird, so dass illegale Kopien mit Soundtracks, die zu unterschiedlichen Sprachen gehören, das gleiche Bildmaterial verwenden können. Eine zuverlässige Identifikation des Kinos, in der die illegale Kopie gefertigt wurde, wird deshalb über den Soundtrack des Films am besten erreicht.

Eine derartige Methode sollte möglichst sowohl bei herkömmlichem Filmmaterial aus Zelluloid als auch bei neuen, digitalen Filmmedien, bei denen eine individuelle Bearbeitung des digitalen Inhalts vor Auslieferung an das entsprechende Kino nicht mehr durchgeführt wird bzw. auf praktikable Weise durchgeführt werden kann, funktionieren.

Wie nunmehr erkannt wurde, ist eine individuelle Kennzeichnung des Materials vor Auslieferung an das Kino auch gar nicht notwendig, wenn ein kino-individuelles Identifizieren bzw. Einbringen eines Kodiersignals in der Kette zwischen dem

(Dolby-)Prozessor, der das Signal für den Soundtrack liefert, und dem Soundsystem mit PA bzw. Boxen eingebracht wird. In diesem Fall kann ein und dasselbe System für jeden beliebigen, in diesem Kino gezeigten Kinofilm verwendet werden, da filmspezifische Informationen nicht benötigt werden. Das Einbringen des Kodiersignals in den Soundtrack kann auf diese Weise völlig unabhängig von der vorherigen Kenntnis des spezifischen Films bzw. des dazu gehörigen Soundtracks durchgeführt werden. Um eine derartige Kennzeichnung zu erreichen, wird zwischen (Dolby-)Prozessor und Soundsystem ein Modulator geschaltet, welcher die meiste Zeit über das vom (Dolby-)Prozessor ankommende Signal einfach an das Soundsystem durchschleift, welcher aber während gewisser Zeitintervalle an das Soundsystem ein zur Identifikation des Kinos geeignetes Identifikationssignal weitergibt.

Dieses Identifikationssignal kann das vom (Dolby-)Prozessor gelieferte Signal vollständig während dieser Zeitintervalle ersetzen oder kann diesem auch überlagert sein. Bei einer vollständigen Ersetzung ist die spätere Wiederauffindung bzw. Detektion dieses Signals gegenüber der Variante, bei der dieses Signal dem Original-Soundtrack oder einer modifizierten Version davon, beispielsweise einer in der Amplitude bzw. Lautstärke reduzierten Version, überlagert ist, einfacher durchführbar. Ein derartiges System kann unabhängig von dem eigentlichen Filmmaterial bzw. Film zur Identifikation des Kinos verwendet werden, da der von der Soundanlage bzw. dem Soundsystem abgestrahlte Sound durch die Einbringung dieses Signals in der Kette zwischen (Dolby-)Prozessor und Soundsystem eine Identifizierung des Kinos ermöglicht.

Ein derartiger zur Identifikationssignal-Generierung verwendeter Modulator ist also gewissermaßen zwischen (Dolby-)Prozessor und Soundsystem geschaltet. Die Installation eines derartigen Systems in einem Kino besteht also einfach darin, dass das Kabel, welches das Signal des (Dolby-)Prozessors normalerweise direkt zum Soundsystem überträgt, in das Kodiersystem integriert wird bzw. mit einem Signaleingang des Kodiersystems verbunden wird, und von seinem entsprechenden Ausgang ein Kabel zu dem Soundsystem führt. Das Identifikationssignal sollte nicht nur einmal, sondern vorteilhafterweise mehrmals während einer Filmvorführung ausgestrahlt werden, um zur Identifikation des Kinos eine gewisse Redundanz zur Verfügung zu haben und so die zuverlässige Identifikation zu erleichtern. Das Kodiersystem wird vorteilhafterweise in einem geschützten mechanischen Einbau geliefert. Gleichermaßen erfolgt sein Einbau im Kino vorzugsweise in mechanisch geschützter Weise. Damit soll ein Schutz gegenüber einer Manipulation mit herkömmlichem Werkzeug (Schraubendreher etc.) gewährleistet werden.

Zur Generierung des Identifikationssignals, das von dem Modulator erzeugt wird, ist erfindungsgemäß eine Kontrolleinheit vorgesehen, die einen Identifikationscode generiert und an den Modulator übermittelt, wobei der Modulator aus diesem Identifikationscode das Identifikationssignal erzeugt. D.h., die kodierte Information, die das Kino eindeutig identifiziert, wird von der Kontrolleinheit an den Modulator übermittelt, welcher daraus ein Signal erzeugt, welches statt des originären Signals des (Dolby-)Prozessors (oder auch diesem überlagert) an das Soundsystem übermittelt wird. Der von der Kontrolleinheit an den Modulator übermittelte Identifikationscode bzw. dessen Informationsgehalt ist also in dem Identifikationssignal enthalten. Die Kontrolleinheit kann zudem die Auswahl der Zeitpunkte bzw. Intervalle übernehmen, zu denen das Identifikationssignal ausgestrahlt werden soll. Beispielsweise kann die Logik der Kontrolleinheit vorsehen, dass in regelmäßigen Zeitintervallen - und gegebenenfalls noch geknüpft an gewisse Bedingungen - das Identifikationssignal über das Soundsystem ausgestrahlt wird.

Vorteilhafterweise ist ein mit der Kontrolleinheit lesbar verbundener persistenter Speicherbaustein vorgesehen, der eine Kinokennzeichnung umfasst, wobei der in der Kinokennzeichnung enthaltene Informationsgehalt in dem von der Kontrolleinheit generierten Identifikationscode wiederauffindbar enthalten ist. Dieser persistente Speicherbaustein enthält also gewissermaßen eine das individuelle Kino charakterisierende Information, welche dann wiederauffindbar in dem von der Kontrolleinheit generierten Code eingebracht ist. Die Kinokennzeichnung ist bevorzugt eine Zahl bzw. Nummer oder eine alphanumerische Zeichenkette.

Der Speicherbaustein kann vor der Auslieferung des Kodiersystems an ein individuelles Kino mit der zugehörigen individuellen Kinokennzeichnung beschrieben werden und ist gewissermaßen durch diesen Speichervorgang das einzige individualisierte Bauteil des Systems. Alle anderen Komponenten, wie beispielsweise der Modulator und die Kontrolleinheit, sind auf gleiche Weise und nicht kinoindividudell ausgeführt. Für den Betrieb des Kodiersystems ist ein lesbarer Zugriff der Kontrolleinheit auf diesen persistenten Speicherbaustein, der vorteilhafterweise als ein programmierbares Speicherelement mit nicht-flüchtigem Speicher ausgeführt ist, nötig. Das Speicherelement kann als EEPROM oder als Flash-Speicher ausgeführt sein. Diesem Speicherlement kann eine einmalige Adresse zugewiesen werden, die bei der Installation des Systems dem Kino zugeordnet wird.

In einer bevorzugten Ausführungsform ist eine Uhr vorgesehen, die die aktuelle Uhrzeit und/oder das aktuelle Datum an die Kontrolleinheit übermittelt, wobei die Kontrolleinheit daraus einen Datums/Uhrzeitcode generiert und an den Modulator übermittelt, wobei der Modulator während einer Anzahl von Zeitintervallen dem Ausgangsmodulsignaleingang ein Datums/Uhrzeitsignal, sonst das am Eingangsmodulsignalausgang anliegende Signal bereitstellt. Der Begriff "Uhr" wird im Rahmen dieser Anmeldung also derartig benutzt, dass ihre Funktion die Bereitstellung der Zeit in Stunden, Minuten, Sekunden und/oder Tag, Monat und Jahr umfasst. Durch die Aufnahme von Informationen in einen von der Kontrolleinheit generierten Code, welche Datum und/oder Uhrzeit enthalten, können bei einer späteren Analyse des akustisch aufgenommenen durch das Soundsystem ausgestrahlten Soundtracks nicht nur das Kino an sich, sondern auch die Zeit der Vorführung erkannt werden. Dadurch können das Zeitintervall, in dem eine illegale Kopie erstellt wurde und dementsprechend auch der dafür in Frage kommende Personenkreis stark eingeschränkt werden.

Es werden von dem Modulator also vorzugsweise zwei verschiedene Signale erzeugt und abgestrahlt, nämlich das Identifikationsignal und das Datums- / Uhrzeitsignal. Diese beiden Signale können zeitlich getrennt voneinander gesendet werden. Es ist auch möglich, die beiden Signale bzw. deren Informationsgehalt zu vereinen und als ein längeres Signal auszustrahlen.

Zur späteren zuverlässigen Identifikation und Auffindung des Identifikationssignals im Soundtrack sollte dieses möglichst aus einer robusten Abfolge von Signalen bestehen. Vorteilhafterweise umfasst der Code deshalb eine codierte Bit-Sequenz, wobei der Modulator das Identifikationssignal aus einer Folge von Rechteckpulsen bildet, welche die Bit-Sequenz repräsentieren. Rechteckpulse können auf einfache Art durch Signale erzeugt werden, in denen für eine vorgegebene Zeitspanne eine konstante Spannung anliegt. Das Identifikationssignal sollte zudem vorteilhafterweise Frequenzen im hörbaren Bereich umfassen, so dass diese von Aufnahmegeräten wie beispielsweise Soundrekordem oder digitalen oder analogen Camcordern mit oder ohne Kodierung oder Komprimierung aufgenommen werden. Es kann auch vorgesehen sein, dass die Signale im nicht hörbaren Bereich angesiedelt sind, sofern die Benutzung von Aufnahmegeräten vermutet wird, welche auch die entsprechenden Frequenzbänder aufnehmen. Es kann auch sein, dass ein Teil des Signals (zeitlicher Teilabschnitt und/oder Teil-Frequenzband) im hörbaren Bereich und ein anderer Teil im nicht hörbaren Bereich angesiedelt ist.

Das Identifikationssignal ist vorteilhafterweise mit Hilfe eines BPSK (Binary Phase Shift Keying) Verfahren kodiert. Eine mögliche Wahl ist z.B. das Manchester-ll-Verfahren. Dieses Verfahren bzw. der entsprechendecode weisen ein self-clocking-Format auf. Das heißt, eine Dekodierung dieses Codes ist ohne ein separates clock bzw. Taktsignal möglich. Er besitzt daher eine relativ hohe Toleranz gegenüber Geschwindigkeitsvariationen des aufgenommenen Soundtracks. Das heißt, auch wenn der illegal aufgezeichnete Soundtrack mit höherer oder geringerer Geschwindigkeit als im Original abgespielt wird oder bereits aufgenommen wurde bzw. in einer solchen Form verbreitet wird, kann die im Identifikationscode enthaltene Bit-Sequenz trotzdem zuverlässig identifiziert werden.

Aufgrund der langen Signalwege und der prinzipiellen Störanfälligkeit der Bild- und Tonsignale sind die zur Übertragung des Soundsignals zu dem (Dolby-)Prozessor und auch von dem (Dolby-)Prozessor zu dem Soundsystem verwendeten Kabel gewöhnlich als symmetrische bzw. "differential" Kabel ausgestaltet. Das heißt, zwei Kabel tragen das Signal mit jeweils umgekehrten Vorzeichen, so dass sich bei einer Subtraktion der beiden Signale Störungen, die in beiden Kabeln mit gleichen Vorzeichen auftreten, gegenseitig eliminieren. Für die Einbringung des Identifikationssignals in den Soundtrack ist es aber zweckmäßig und einfacher, mit einem einpolig geerdeten ("single ended") Signal zu arbeiten. Erfindungsgemäß umfasst daher das Eingangsmodul einen Eingangskonverter, welcher ein am Eingangsmodulsignaleingang anliegendes symmetrisches Eingangssignal des Prozessors in ein einpolig geerdetes Signal konvertiert und am Eingangsmodulsignalausgang bereitstellt, und das Ausgangsmodul umfasst einen Ausgangskonverter, welcher ein am Ausgangsmodulsignaleingang anliegendes einpolig geerdetes Signal des Modulators in ein symmetrisches Ausgangssignal konvertiert und am Ausgangsmodulsignalausgang bereitstellt.

Das Identifikationssignal wird bevorzugt nach einer frei wählbaren oder auch vordefinierten Sequenz eingespielt. Zudem sollte sichergestellt werden, dass das Signal von Aufnahmegeräten wie Camcordern in wiederauffindbarer Weise, d.h. genügend differenziert und mit ausreichender Amplitude, aufgenommen wird.

Geräte wie Camcorder weisen aber gewöhnlich eine Aufnahmesensibilität auf, die sich als fast-attack-slow-decay charakterisieren lässt. Das heißt, bei einem plötzlichen Anstieg des Signals in seiner Lautstärke wird die Sensibilität des Gerätes äußerst schnell heruntergefahren, während sie nach einem lauten Geräuschpegel erst langsam wieder größer eingestellt wird. Das heißt, unmittelbar nach einem lauten Geräusch sind diese Geräte gegebenenfalls zu unsensibel, um das Identifikationssignal in einer Weise aufnehmen zu können, so dass es später bei einer Analyse des Soundtracks gefunden werden kann. Das Identifikationssignal wird daher nach einem gewissen Zeitintervall gesendet, nach dem die Geräte ihre Sensitivität ausreichend zurückgewonnen haben.

Um eine Platzierung des Signals zu ermöglichen, weist das Kodiersystem erfindungsgemäß ein Amplitudenmodul auf, welches das einpolig geerdete Signal zu einem die Amplitude dieses Signals charakterisierendes Amplitudensignal verarbeitet und an die Kontrolleinheit übermittelt, wobei die Kontrolleinheit den Modulator anweist, das Identifikationssignal in günstigen Zeitintervallen bereitzustellen. Das einpolig geerdete Signal wird in dem Amplitudenmodul zunächst von einem Gleichrichter ("Rectifier") gleichgerichtet und dann mit der fast-attack-slow-decay-Charakteristik geglättet.

Die Zeitpunkte, zu denen das Identifikationssignal ausgestrahlt werden soll, können somit beispielsweise so gewählt werden, dass die Kontrolleinheit alle 20 Minuten versucht, das Identifiktionssignal im Soundtrack zu platzieren und somit alle 20 Minuten gewissermaßen eine Stelle abwartet, bei der der Soundtrack eine passende Stelle aufweist.

Um das von dem Rectifier verarbeitete Signal der Kontrolleinheit bereitzustellen ist vorteilhafterweise zwischen Rectifier und Kontrolleinheit ein Analog-Digital(A/D)-Wandler geschaltet.

Die oben genannte Aufgabe wird in Bezug auf das Verfahren gelöst, indem ein von einem Prozessor, insbesondere einem Dolby-Prozessor, bereitgestelltes Signal während einer Anzahl von Zeitintervallen durch ein Identifikationssignal ersetzt wird und während dieser Zeitintervalle das Identifikationssignal, sonst das von dem Prozessor bereitgestellte Signal, an das Soundsystem weitergegeben wird. Alternativ dazu kann auch das Identifikationssignal dem von dem Prozessor gelieferten Signal überlagert werden.

Die Vorteile der Erfindung bestehen insbesondere darin, dass durch einen zwischen (Dolby-)Prozessor und Soundsystem geschalteten Modulator gewissermaßen "online" bzw. "on the fly" und im Echtzeitverfahren während der Vorführung des Kinofilms ein Identifikationssignal über das Soundsystem abgestrahlt werden kann. Es sind dabei keine filmspezifischen Informationen notwendig. Wird neben einem Signal, welches einen eindeutigen Kino-Identifikationscode (Cinema Unique Identifier) aufweist, auch ein Signal eingebracht, welches Uhrzeit und Datum enthält, kann nicht nur das Kino bzw. der Kinosaal, sondern auch die Uhrzeit bei der Analyse des Soundtracks ermittelt werden. Auf diese Weise kann der Kreis der in Frage kommenden Personen, die die Aufnahme gemacht haben, noch weiter eingeschränkt werden. Im Extremfall, wenn ein aufgenommener Soundtrack direkt online bereitgestellt wird, kann gegebenenfalls die entsprechende Person noch vor Ablauf des Filmes identifiziert werden.

Mit Hilfe eines Rectifiers mit einer fast-attack-slow-decay-Charakteristik können bevorzugte Zeitpunkte zur Einbringung des Identifikationssignals gefunden werden, zu denen das Signal von dem Zuschauer nicht auffällig wahrgenommen wird, zu denen aber Aufnahmegeräte eine genügende Sensitivität aufweisen, um dieses Signal in wiederauffindbarer Weise aufzunehmen.

Ein Ausführungsbeispiel der Erfindung ist in einer Figur näher erläutert. Darin ist in stark schematisierter Darstellung ein Kodiersystem gezeigt mit einem Eingangsmodul, einem Ausgangsmodul, einem Modulator, einer Kontrolleinheit, einem Speicherbaustein, einer Uhr und einem Rectifier.

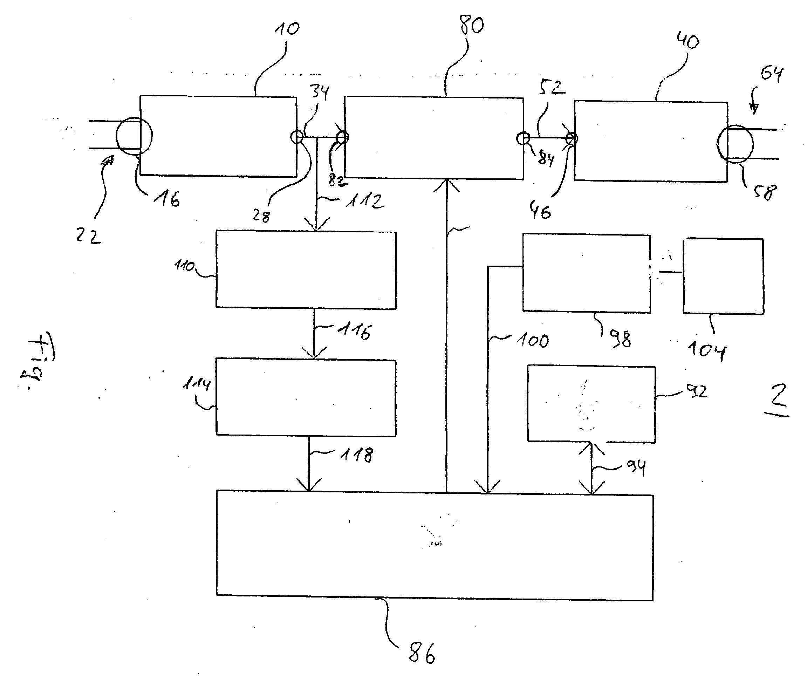

Das in der Figur gezeigte schematisch dargestellte Kodiersystem 2 weist ein Eingangsmodul 10 auf mit einem Eingangsmodulsignaleingang 16 für ein symmetrisches Eingangssignal 22 von einem (Dolby-)Prozessor. Das Eingangsmodul 10 wandelt dieses symmetrische Eingangssignal 22 in ein an einem Eingangsmodulsignalausgang 28 bereitgestelltes einpolig geerdetes Signal 34 um. Das Kodiersystem 2 weist gleichermaßen ein Ausgangsmodul 40 auf mit einem Ausgangsmodulsignaleingang 46 für ein einpolig geerdetes Signal 52 und mit einem Ausgangsmodulsignalausgang 58, an dem ein symmetrisches Ausgangssignal 64 für ein Soundsystem eines Kinos bereitgestellt wird. In dem Fall, dass der Eingangsmodulsignalausgang 28 und der Ausgangsmodulsignaleingang 46 direkt miteinander verbunden werden, wird das symmetrische Eingangssignal 22 gewissermaßen nach zweifacher Umwandlung an das Soundsystem als symmetrisches Ausgangssignal 64 durchgeschleift. Das Eingangsmodul 10 fungiert gewissermaßen als Vorverarbeitungsmodul und das Ausgangsmodul 40 fungiert gewissermaßen als Nachverarbeitungsmodul.

Das Kodiersystem 2 ermöglicht die Einbringung eines Identifikationssignals in den ausgestrahlten Soundtrack des entsprechenden Films. Dazu muss der Soundtrack, der im vorliegenden Beispiel in digitaler Form vorliegt, nicht im Vorhinein präpariert werden, gleiches gilt für das Bildmaterial. Das Identifikationssignal wird gewissermaßen in Echtzeit bzw. "online" in den Soundtrack eingebracht bzw. ersetzt diesen an geeignet gewählten Stellen. Um die Einbringung eines das Kino eindeutig identifizierendes Identifikationssignals in den abgestrahlten Sound bzw. Soundtrack zu rmöglichen, ist erfindungsgemäß ein Modulator 80 vorgesehen, der gewissermaßen zwischen Eingangsmodul 10 und Ausgangsmodul 40 geschaltet ist. Das heißt, an einem Modufatorsignaleingang 82 liegt das einpolig geerdete Signal 34 an und an einem Modulatorsignalausgang 84 wird das einpolig geerdete Signal 52 dem Ausgangsmodul 40 an dessen Ausgangsmodulsignaleingang 46 bereitgestellt.

Zu Zeitpunkten, deren bevorzugte Auswahl weiter unten diskutiert wird, ersetzt der Modulator 80 das von dem (Dolby-)Prozessor abgegebene symmetrische Eingangssignal 22 bzw. das im Eingangsmodul 10 umgewandelte einpolig geerdete Signal 34 durch ein Identifikationssignal. Der Modulator benutzt dazu CMOS-Analogschalter, die ihren Signalausgang entweder direkt an den Modulatorsignaleingang 82 während der normalen Abstrahlung des Soundtracks koppeln oder diesen zur Generierung des Identifikationssignals an drei verschiedene Spannungen koppeln, nämlich 0 Volt (kein Signal), eine positive Referenzspannung oder eine negative Referenzspannung. Auf diese Weise kann eine digital kodierte (Manchester-II-)Modulation durchgeführt werden und ein entsprechend kodiertes Signal an dem Modulatorsignalausgang 84 bereitgestellt werden. Dieses Verfahren ist aufgrund seiner self-clocking-Eigenschaft tolerant gegenüber Geschwindigkeitsvariationen des aufgenommenen bzw. dann wieder abgespielten Soundtracks.

Die positive Referenzspannung und die negative Referenzspannung werden so gewählt, dass das von dem Modulator auf die soeben beschriebene Weise generierte Identifikationssignal im hörbaren Bereich bzw. in dem Frequenzbereich liegt, der von typischen Aufnahmegeräten, wie MP3-Rekordern oder Camcordern in einem Frequenzbereich mit ausreichender Sensitivität liegt. Ein derart generiertes Signal hat typischerweise eine Zeitdauer von wenigen Millisekunden und wird von einem aufmerksamen Zuhörer gegebenenfalls als kurze Störung empfunden. Die z.B. durch das Manchester-ll-Verfahren kodierte Bit-Sequenz, die den Identifikationscode für das Kino repräsentiert, wird mit Hilfe eines Fehlerkorrekturverfahrens in dem Modulator generiert. Dazu werden so genannte "HAMMING-Bits" verwendet, welche die Korrektur von 1-Bit-Fehlern und das Auffinden von Fehlern von mehreren Bits ermöglichen. Die Codes für die Identifikation des Kinos und des Datums und der Uhrzeit (siehe unten) haben im vorliegenden Beispiel 16 Informations-Bits + 5 Bits HAMMING-Code.

Während der Modulator 80 dafür zuständig ist, eine gewisse Bit-Sequenz an das Soundsystem zu übermitteln, wird die eigentliche Kodieraufgabe und auch die Steuerung bzw. Bestimmung der Zeitpunkte, an denen der Identifikationscode in den Soundtrack eingebracht werden soll, von einer Kontrolleinheit 86 durchgeführt. Das heißt, die Kontrolleinheit 86 übermittelt dem Modulator 80 jeweils den entsprechenden Code und bestimmt auch die Zeitpunkte bzw. Zeitintervalle, in denen der Identifikationscode eingebracht werden soll. Die Kontrolleinheit 86 ist im vorliegenden Ausführungsbeispiel als eine programmierbare Logik ausgestaltet. Dazu könnte beispielsweise eine ASIC (Applikation Specific Integrated Circuit) mit einem FPGA (Field Programmable Gate Array) aus der Xilinx™-Spartan 3 Series verwendet werden. Sie ist für alle logischen Funktionen, das Timing und die Erzeugung der Codes für den Modulator 80 verantwortlich. In alternativer Ausgestaltung ist die Kontrolleinheit 86 als Universalcomputer bzw. Embedded Device ausgestaltet mit einem Hauptprozessor und einer ROM- und einer RAM-Einheit, auf denen softwaremäßig die logischen Operationen und sonstigen oben genannten Funktionen implementiert sind.

Die für das jeweilige Kino, in dem das System installiert werden soll, individuelle Kinokennzeichnung ist in einem Speicherbaustein 92 hinterlegt, der gewissermaßen als Kino-Identifikationsregister fungiert und als reprogrammierbares Speicherelement (z.B. EEPROM) ausgebildet ist. Die Kontrolleinheit 86 hat während des Betriebes des Kodiersystems 2 Lesezugriff auf die im Speicherbaustein 92 abgespeicherte Kinokennzeichnung. Dies ist durch einen Pfeil 94 symbolisch dargestellt. Der Speicherbaustein 92 ist gewissermaßen die einzige kino-individuelle Komponente, da er jeweils einen dem Kino zugeordneten individuellen Code enthält. Alle anderen bisher genannten technischen Komponenten des Kodiersystems 2 sowie die Komponenten, die im Folgenden noch genannt werden, können im Wesentlichen identisch und unabhängig von dem spezifischen Kino gewählt werden.

Wie oben dargestellt, kann auch ein Code in das Soundsignal eingebracht werden, weicher u.a. Uhrzeit und Datum enthält. Dieser Code kann unmittelbar vor oder nach dem Kino-Identifikationscode einmoduliert werden, er kann auch alternativ an zeitlich separaten Stellen von dem Modulator 80 an das Ausgangsmodul geleitet werden und damit in das Soundsignal eingebracht werden. Um diesen Code generieren zu können, ist eine als Echtzeituhr 98 ausgestaltete Uhr vorgesehen, die das Datum und die aktuelle Zeit an die Kontrolleinheit 86 übermittelt. Dies ist durch eine Pfeil 100 dargestellt. Die Echtzeituhr 98 hat eine Genauigkeit von ungefähr 10 ppm (parts per million), was ungefähr einer Genauigkeit von 5 Minuten pro Jahr entspricht. Eine solche Genauigkeit bzw. Ungenauigkeit ist völlig ausreichend, um den Zeitpunkt der Ausstrahlung bzw. Darbietung des Filmes zu identifizieren. Im Falle eines Ausfalls der Stromversorgung wird die Echtzeituhr 98 von einer Batterie 104, die vorzugsweise als (ladbare) Lithiumbatterie ausgestaltet ist, mit Energie versorgt. Diese Batterie 104 hat eine Kapazität, die derart dimensioniert ist, dass sie die Echtzeituhr 98 mehr als 2 Jahre mit der nötigen Energie versorgen kann.

Das Identifikationssignal bzw. das Datum und Uhrzeit enthaltende Signal werden vorteilhafterweise dann in den Soundtrack eingespielt, wenn der Zuschauer das Signal nicht störend wahrnimmt. Um derartige Stellen im Soundtrack automatisch identifizieren zu können, ist ein Amplitudenmodul 110 vorgesehen, der - wie durch den Pfeil 112 angedeutet - eingangsseitig das einpolig geerdete Signal 34 aufnimmt. Das Amplitudenmodul 110 umfasst einen Gleichrichterm, der dieses Signal gleichrichtet, und glättet es mit einer fast-attack-slow-decay-Charakteristik, die ähnlich ist wie die Aufnahmecharakteristik gängiger Aufnahmegeräte.

Das daraus entstehende Signal ist dann gewissermaßen unter Berücksichtigung dieser Charakteristik proportional zu der Lautstärke des Soundtracks bzw. der Audiodaten. Dieses Signal wird dann an einen Analog-Digital-Wandler 114 weitergegeben (angedeutet durch einen Pfeil 116), wobei der Analog-Digital-Wandler 114 dann (gekennzeichnet durch einen Pfeil 118) das entsprechende digitale Signal der Kontrolleinheit 86 bereitstellt. Der Kontrolleinheit 86 stehen auf diese Weise Informationen über die aktuelle Lautstärke des Audiosignals zur Verfügung, wobei diese Informationen schon mit einer fast-attack-slow-decay-Charakteristik versehen sind. Auf diese Weise kann die Kontrolleinheit 86 Stellen im Soundtrack identifizieren, die auf eine markante Amplitude des Audiosignals folgen, die aber dennoch zeitlich gesehen weit genug hinter dieser Stelle liegen, so dass die Sensitivität der Aufnahmegeräte ausreicht, dass das einmodulierte Identifikationssignal bei einer Wiedergabe des Soundtracks mit hoher Zuverlässigkeit und Genauigkeit identifiziert werden kann.

Das oben beschriebene Kodiersystem 2 kann auch zu einem System zur Identifizierung eines Kinos dahingehend erweitert werden, dass eine Auswerteeinheit vorgesehen ist, mit der ein Soundtrack, der von einem Aufnahmegerät in einem Kino, das mit einem erfindungsgemäßen Kodiersystem 2 ausgestattet ist, aufgenommen wurde, analysiert wird. Ein derartiges Auswertesystem bedarf aufgrund der speziellen Struktur des kodierten Identifikationssignals keiner Interaktion seitens eines Benutzers bzw. Bedieners während des Auswertevorgangs, da die Detektion von Identifikationssignal oder Uhrzeit/Datumsignal vollautomatisch ablaufen kann. Die Auswerteeinheit kann beispielsweise ein universeller Computer sein, der mit einer Analysesoftware für Audiodaten ausgestattet ist. Während der Auswertung eines Soundtracks kann gezielt nach Signalen gesucht werden, die die Charakteristik der entsprechenden Signale aufweisen, beispielsweise die Anzahl der Bits und die Amplituden bzw. Wellenformen der Signale (Identifikationssignal und Zeit/Datums-Signal). Eine derartige Überprüfung kann schneller als in Echtzeit erfolgen.

Eine zuverlässige Identifikation des Kinos und der Aufnahmezeit des Audiosignals wird einerseits dadurch gewährleistet, dass das Signal an mehreren Stellen im Soundtrack aufzufinden ist, da die Kontrolleinheit 86 das Signal mehrmals durch den Modulator 80 in den Soundtrack einmoduliert. Andererseits sorgen auch z. B. das Manchester-ll-Kodierverfahren und die Übertragung mit HAMMING-Bits, die eine Fehlerkorrektur bzw. Fehlerdiagnose ermöglichen, für eine zuverlässige Auslesung der entsprechenden Codes.

Das erfindungsgemäße Kodiersystem 2 kann dazu verwendet werden, nicht nur eine eindeutige Identifikation des Kinos, in dem der Soundtrack aufgenommen wurde, zu ermöglichen, sondern darüber hinaus auch die ungefähre räumliche Position bzw. den Standort des entsprechenden Aufnahmegerätes zu ermitteln. Dazu werden auf den unterschiedlichen Soundkanälen des (Dolby-)Systems (jeweils links / rechts, vorne, an den Seiten, hinten), aus denen sich das symmetrische Eingangssignal 22 gewöhnlich zusammensetzt, unterschiedliche Signale, die von der Kontrolleinheit 86 erzeugt werden, von dem Modulator 80 einmoduliert. Dies geschieht jeweils in der oben beschriebenen Weise. Aus dem Lautstärke- bzw. Amplitudenverhältnis der einzelnen Signale in der Aufnahme und der Kenntnis der räumlichen Position der einzelnen Lautsprecher im Vorführungssaal wird dann rechnerisch die (ungefähre) Position des Aufnahmegerätes bestimmt.

Alternativ dazu kann auch in allen Kanälen dasselbe Signal verwendet werden, wobei jeweils eine vorgegebene Sequenz dieses Signals in den verschiedenen Soundkanälen abgespielt wird. Aufgrund der zeitlichen Reihenfolge dieses Signals in den einzelnen Kanälen kann dann jedes Vorkommen dieses Signals im Soundtrack eindeutig einem der Soundkanäle zugordnet werden.

### Bezugszeichenliste

- 2: Kodiersystem
- 10: Eingangsmodul
- 16: Eingangsmodulsignaleingang
- 22: symmetrisches Eingangssignal
- 28: Eingangsmodulsignalausgang
- 34: einpolig geerdetes Signal
- 40: Ausgangsmodul
- 46: Ausgangsmodulsignaleingang
- 52: einpolig geerdetes Signal
- 58: Ausgangsmodulsignalausgang
- 64: symmetrisches Ausgangssignal
- 80: Modulator
- 82: Modulatorsignaleingang
- 84: Modulatorsignalausgang
- 86: Kontrolleinheit
- 92: Speicherbaustein
- 94: Pfeil
- 98: Echtzeituhr
- 100: Pfeil
- 104: Batterie
- 110: Amplitudenmodul
- 112: Pfeil
- 114: Analog-Digital-Wandler
- 118: Pfeil

## Patentansprüche

1. Kodiersystem (2) zur Einbringung eines zur Identifikation eines Kinos geeigneten Signals in ein von einem Soundsystem des Kinos akustisch ausgestrahltes Soundsignal, umfassend:
- ein Eingangsmodul (10), welches einen Eingangsmodulsignaleingang (16) für ein Eingangssignal von einem Prozessor, insbesondere einem Dolby Prozessor, und einen Eingangsmodulsignalausgang (28) aufweist,
- ein Ausgangsmodul (40), welches einen Ausgangsmodulsignaleingang (46) und einen Ausgangsmodulsignalausgang (58) zum Anschluss an ein Soundsystem aufweist,
- einen Modulator (80), der zwischen Eingangsmodulsignalausgang (28) und Ausgangsmodulsignaleingang (46) geschaltet ist und während einer Anzahl von Zeitintervallen dem Ausgangsmodulsignaleingang (46) ein Identifikationssignal, sonst das am Eingangsmodulsignalausgang (28) anliegende Signal bereitstellt, wobei eine Kontrolleinheit (86) vorgesehen ist, die einen Indentifikationscode generiert und an den Modulator (80) übermittelt, und wobei der Modulator (80) aus dem Identifikationscode das Identifikationssignal erzeugt, wobei das Eingangsmodul (10) einen Eingangskonverter umfasst, welcher ein am Eingangsmodulsignaleingang (16) anliegendes symmetrisches Eingangssignal (22) des Prozessors in ein einpolig geerdetes Signal (34) konvertiert und am Eingangsmodulsignalausgang (28) bereitstellt, und wobei das Ausgangsmodul (40) einen Ausgangskonverter umfasst, welcher ein am Ausgangsmodulsignaleingang (46) anliegendes einpolig geerdetes Signal (34) des Modulators (80) in ein symmetrisches Ausgangssignal (64) konvertiert und am Ausgangsmodulsignalausgang (58) bereitstellt, wobei ein Amplitudenmodul (110) vorgesehen ist, welches das einpolig geerdete Signal (34) zu einem die Amplitude dieses Signals charakterisierendes Amplitudensignal verarbeitet und an die Kontrolleinheit (86) übermittelt.

2. System (2) nach Anspruch 1, wobei ein mit der Kontrolleinheit (86) lesbar verbundener persistenter Speicherbaustein (92) vorgesehen ist, der eine Kinokennzeichnung umfasst, und wobei der in der Kinokennzeichnung enthaltene Informationsgehalt in dem von der Kontrolleinheit (86) generierten Identifikationscode wiederauffindbar enthalten ist.

3. System (2) nach Anspruch 1 oder 2, wobei eine Uhr (98) vorgesehen ist, die die aktuelle Uhrzeit und/oder das aktuelle Datum an die Kontrolleinheit (86) übermittelt und wobei die Kontrolleinheit (86) daraus einen Datums/Uhrzeitcode generiert und an den Modulator (80) übermittelt, wobei der Modulator (80) während einer Anzahl von Zeitintervallen dem Ausgangsmodulsignaleingang (46) ein Datums/Uhrzeitsignal, sonst das am Eingangsmodulsignalausgang (28) anliegende Signal bereitstellt.

4. System (2) nach einem der Ansprüche 1 bis 3, wobei der Identifikationscode eine kodierte Bitsequenz umfasst und wobei der Modulator (80) das Identifikationssignal aus einer Folge von Rechteckpulsen bildet, welche die Bitsequenz repräsentieren.

5. System (2) nach Anspruch 4, wobei das Identifikationssignal nach einem Binary Phase Shift Keying Verfahren kodiert ist.

6. System (2) nach Anspruch 1, wobei zwischen Amplitudenmodul (110) und Kontrolleinheit (86) ein A/D-Wandler (114) geschaltet ist.

## Claims

1. A coding system (2) for inputting a signal suitable for identifying a cinema into a sound signal acoustically emitted by a sound system of the cinema, comprising:
- an input module (10) including an input module signal input (16) for an input signal of a processor, in particular a Dolby processor, and an input module signal output (28),
- an output module (40) including an output module signal input (46) and an output module signal output (58) for connection to a sound system,
- a modulator (80) switched between the input module signal output (28) and the output module signal input (46) and presenting an identification signal at the output module signal input (46) during a number of time intervals, otherwise presenting the signal applied to the input module signal output (28), wherein a control unit (86) is provided, which generates an identification code and transmits it to the modulator (80), and wherein the modulator (80) generates the identification signal from the identification code, wherein the input module (10) comprises an input converter, which converts a symmetrical input signal (22) of the processor, applied to the input module signal input (16), into a signal (34) grounded in a unipolar manner and presents it at the input module signal output (28), and wherein the output module (40) comprises an output converter, which converts a signal (22) of the modulator (80), grounded in a unipolar manner and applied to the output module signal input (46), into a symmetrical output signal (64) and presents it at the output module signal output (58), wherein an amplitude module (110) is provided, which processes the signal (34) grounded in a unipolar manner into an amplitude signal characterizing the amplitude of this signal and transmits it to the control unit (86).

2. The system (2) of claim 1, wherein a persistent memory module (92) readably connected with the control unit (86) is provided, which comprises a cinema identification, and wherein the information content contained in the cinema identification is retrievably contained in the identification code generated by the control unit (86).

3. The system (2) of claim 1 or 2, wherein a clock (98) is provided, which transmits the current hour and/or the current date to the control unit (86), and wherein the control unit (86) generates a date/hour code therefrom and transmits it to the modulator (80), wherein the modulator (80) presents an date/hour signal at the output module signal input (46) during a number of time intervals, and otherwise presents the signal applied to the input module signal output (28).

4. The system (2) of any of claims 1 to 3, wherein the identification code comprises a coded bit string and wherein the modulator (80) forms the identification signal from a sequence of rectangular pulses representing the bit string.

5. The system (2) of claim 4, wherein the identification signal is coded according to a binary phase shift keying method.

6. The system (2) of claim 1, wherein an A/D transducer (114) is switched between the amplitude module (110) and the control unit (86).

## Revendications

1. Système de codage (2) pour entrer un signal approprie à identifier un cinéma, dans un signal de son émis acoustiquement par un système de son du cinéma, comprenant:
- un module d'entrée (10) comprenant une entrée de signal du module d'entrée (16) pour un signal d'entrée d'un processeur, en particulier un processeur Dolby, et une sortie de signal du module d'entrée (28),
- un module de sortie (40) comprenant une entrée de signal du module de sortie (46) et une sortie de signal du module de sortie (58) pour être relié à un système de son,
- un modulateur (80) connecté entre la sortie de signal du module d'entrée (28) et l'entrée de signal du module de sortie (46) et présentant un signal d'identification à l'entrée de signal du module de sortie (46) pendant un nombre d'intervalles de temps, autrement présentant le signal appliqué à la sortie de signal du module d'entrée (28), dans lequel une unité de contrôle (86) est prévue qui génère un code d'identification et le transmet au modulateur (80), et dans lequel le modulateur (80) génère le signal d'identification à partir du code d'identification, dans lequel le module d'entrée (10) comprend un convertisseur d'entrée qui convertit un signal d'entrée symétrique (22) du processeur, appliqué à l'entrée de signal du module d'entrée (16), en un signal (34) mis à la terre d'une manière unipolaire et le présente à la sortie de signal du module d'entrée (28), et dans lequel le module de sortie (40) comprend un convertisseur de sortie, qui convertit un signal (22) du modulateur (80), mis à la terre d'une manière unipolaire et appliqué à l'entrée de signal du module de sortie (46), en un signal de sortie symétrique (64) et le présente à la sortie de signal du module de sortie (58), dans lequel un module d'amplitude (110) est prévu qui traite le signal (34) mis à la terre d'une manière unipolaire en un signal d'amplitude caractérisant l'amplitude de ce signal et le transmet à l'unité de contrôle (86).

2. Système (2) selon la revendication 1, dans lequel un module mémoire persistant (92) relié de manière lisible avec l'unité de contrôle (86) est prévu, qui comprend une identification, et dans lequel le contenu d'information contenu dans l'identification de cinéma est contenu de manière retrouvable dans le code d'identification généré par l'unité de contrôle (86).

3. Système (2) selon la revendication 1 ou 2, dans lequel une horloge (98) est prévue, qui transmet l'heure actuelle et/ou la date actuelle à l'unité de contrôle (86), et dans lequel l'unité de contrôle (86) génère à partir de cela un code de date/heure et le transmet au modulateur (80), dans lequel le modulateur (80) présente un signal de date/heure à l'entrée de signal du module de sortie (46) pendant un nombre d'intervalles de temps et autrement présente le signal appliqué à la sortie de signal du module d'entrée (28).

4. Système (2) selon l'une quelconque des revendications 1 à 3, dans lequel le code d'identification comprend une séquence codée de bits et dans lequel le modulateur (80) forme le signal d'identification à partir d'une séquence d'impulsions rectangulaires représentant la séquence de bits.

5. Système (2) selon la revendication 4, dans lequel le signal d'identification est codé selon un procédé binary phase shift keying.

6. Système (2) selon la revendication 1, dans lequel un transducteur A/D (114) est connecté entre le module d'amplitude (110) et l'unité de contrôle (86).
